# FASCICULE DE BREVET EUROPEEN

(11) **EP 3 449 634 B1**
(45) Date de publication et mention de la délivrance du brevet: **27.10.2021**
(21) Numéro de dépôt: 17722108.2
(22) Date de dépôt: 18.04.2017
(51) Int. Cl.: H04N 19/48, H04N 21/4223, H04N 21/4728, H04N 21/2343, H04N 21/24, H04N 21/442

(54) **PROCÉDÉ DE COMPOSITION CONTEXTUELLE D'UNE REPRÉSENTATION VIDÉO INTERMÉDIAIRE**
VERFAHREN ZUR KONTEXTUELLEN ZUSAMMENSETZUNG EINER ZWISCHENVIDEOPRÄSENTATION
METHOD FOR THE CONTEXTUAL COMPOSITION OF AN INTERMEDIATE VIDEO REPRESENTATION

(30) Priorité: 29.04.2016 FR 1653869
(43) Date de publication de la demande: 06.03.2019
(73) Titulaire: ORANGE, 92130 Issy-les-Moulineaux (FR)
(72) Inventeur: MORY, Emmanuel, 35830 Betton (FR); HOUZE, Patrice, 35000 Rennes (FR)
(86) Numéro de dépôt international: PCT/FR2017/050919
(87) Numéro de publication internationale: WO 2017/187044

(56) Documents cités:
- WO-A1-2013/036237
- US-A- 5 550 928
- US-A1- 2015 015 789
- MASAYUKI INOUE ET AL: "Interactive panoramic video streaming system over restricted bandwidth network", PROCEEDINGS OF THE INTERNATIONAL CONFERENCE ON MULTIMEDIA, MM '10, 1 janvier 2010 (2010-01-01), page 1191, XP055120221, New York, New York, USA DOI: 10.1145/1873951.1874184 ISBN: 978-1-60-558933-6

## Description

### DOMAINE TECHNIQUE

L'objet de la présente invention se situe dans le domaine du codage de vidéo numérique et plus précisément dans le domaine de la compression vidéo.

### ETAT DE LA TECHNIQUE

Les technologies d'accès à internet permettent aujourd'hui la consultation d'une séquence vidéo de haute qualité sans téléchargement préalable de la séquence complète. Pour cela, les décodeurs vidéo mettent en oeuvre des techniques de lecture en continu dites de « streaming » vidéo selon lesquelles les paquets de données sont téléchargés à un rythme correspondant au débit de la vidéo encodée. Le décodage et la restitution d'une trame vidéo peuvent ainsi être réalisés en parallèle du téléchargement des trames suivantes.

L'inconvénient de cette solution est l'impossibilité de s'adapter à la qualité de la connexion de l'utilisateur. Il est ainsi souvent nécessaire pour le diffuseur d'offrir, pour la même séquence vidéo, plusieurs versions encodées à des débits différents afin que les lecteurs vidéo des utilisateurs puissent choisir une version compatible avec la connexion.

Les standards de transport vidéo modernes tels que MPEG-DASH (Dynamic Adaptative Streaming over HTTP) prévoient le découpage des flux vidéo en une pluralité de segments, chacun des segments étant disponible en différentes versions encodées à différents débits. Ainsi, pendant la lecture d'un segment par un client MPEG-DASH, le client sélectionne automatiquement le segment suivant parmi les différentes versions disponibles en fonction des conditions réseau détectées. Le choix de la version la plus adaptée aux conditions réseau est ainsi réalisé automatiquement par le client MPEG-DASH, de façon transparente pour l'utilisateur.

Malgré tout l'intérêt de cette solution, le choix reste limité aux versions mis à disposition par le diffuseur et n'est pas toujours optimal pour l'utilisateur. Par exemple, si une séquence vidéo est disponible en deux versions, la première version étant encodée à 4Mo/s et la seconde version étant encodée à 1Mo/s, un utilisateur disposant d'une connexion à 3.5Mo/s devra se contenter de la version de basse qualité. Ainsi, pour offrir la meilleure qualité à leurs utilisateurs, les diffuseurs doivent héberger de nombreuses versions d'un même contenu. Malheureusement, le codage et le stockage des différentes versions nécessitent une infrastructure importante qui a un coût non négligeable pour les diffuseurs, alors même que certaines versions seront très peu sollicitées par les utilisateurs.

Une autre approche pour réaliser l'adaptation à la bande passante du réseau consiste à utiliser un codage scalable. La scalabilité est la possibilité de pouvoir offrir un flux vidéo codé avec différents niveaux de qualité. Le signal est codé dans un seul flux binaire de manière à offrir la possibilité de décoder un flux de base et des flux dits de rehaussement dont la qualité augmente successivement. La scalabilité peut être mise en oeuvre selon différentes modalités, spatiale, temporelle ou en qualité. Lorsqu'une scalabilité spatiale est mise en oeuvre, les flux de rehaussement permettent d'améliorer la résolution du contenu. Une scalabilité temporelle permet d'offrir plusieurs fréquences temporelles du signal, les flux de rehaussement permettant d'augmenter progressivement la fréquence des images d'un flux vidéo décodé. Enfin, la scalabilité en qualité (ou SNR pour Signal to Noise Ratio) permet d'améliorer la qualité réduisant la distorsion de quantification entre l'image originale et l'image reconstruite. Ces différentes modalités peuvent être utilisées conjointement ou indépendamment les unes des autres.

La scalabilité permet donc une adaptation fine de la qualité d'une séquence vidéo à la bande passante disponible. Toutefois, ces techniques induisent une complexité de codage et de décodage importante et nécessitent un surcoût de bande passante de l'ordre de 20%, ce qui est souvent contre-productif par rapport à un codage multi-débits tel que décrit précédemment.

Il existe donc un besoin pour une solution de streaming adaptatif qui soit capable de s'adapter de façon optimale à la bande passante disponible, qui ne nécessite pas l'hébergement de nombreuses versions d'un même contenu et qui ne provoque pas une consommation accrue de bande passante, tout en préservant la qualité perçue par les spectateurs.

Le document intitule "Interactive Panoramic Video Streaming System over Restricted Bandwidth Network" ayant pour auteurs Masayuki Inoue, Hideaki Kimata, Katsuhiko Fukazawa, and Norihiko Matsuura, NTT Cyber Space Laboratories, NTT Corporation enseigne deconstruire une image à partir d'un ensemble de tuiles sélectionnées de façon à respecter un débit cible tout en optimisant la qualité perçue par l'utilisateur.

### RÉSUMÉ DE L'INVENTION

L'invention concerne un procédé de composition tel que défini dans la revendication 1.

L'invention permet ainsi de composer une nouvelle représentation intermédiaire à partir d'au moins deux représentations différentes d'une même séquence, sans nécessiter l'encodage ni le stockage de la représentation composée. Pour cela, les images correspondant à un même instant dans les différentes représentations sont partitionnées de manière identique en une pluralité de tuiles de façon à ce qu'à chaque instant, le partitionnement d'une image dans une représentation corresponde au partitionnement de l'image correspondante dans les autres représentations. De façon avantageuse, le procédé utilise une donnée représentative de l'activité des spectateurs à proximité du terminal de restitution afin de déterminer des tuiles qui doivent être sélectionnées dans une représentation de bonne qualité. Une telle donnée de contexte peut être obtenue par une analyse d'images capturées par un capteur associé au terminal de restitution afin de détecter la présence de spectateurs et suivre leur regard. Le procédé permet ainsi de sélectionner des tuiles de bonne qualité pour une zone de l'écran observée par un spectateur et améliore de cette façon la qualité perçue.

Le procédé permet ainsi d'adapter l'agencement spatial des tuiles de bonne et de moins bonne qualité selon qu'un nouveau spectateur est à proximité du terminal de restitution. Par exemple, le procédé peut sélectionner des tuiles de qualité au centre de la vidéo lorsqu'un nouveau spectateur est détecté. Une telle disposition améliore la qualité perçue par l'utilisateur car il a été montré que lorsqu'un utilisateur arrive près d'un écran, son regard se porte en premier lieu au centre de l'écran.

La donnée représentative de l'activité des spectateurs à proximité du terminal de restitution peut concerner au moins un emplacement observé par au moins un spectateur. De tels emplacements peuvent être déterminés à partir d'algorithmes connus de suivi du regard. La qualité peut ainsi être améliorée dans la zone de l'écran observée par un spectateur.

La donnée représentative de l'activité des spectateurs peut également comporter une information sur un déplacement de l'utilisateur par rapport au dispositif de restitution. Par exemple, lorsqu'un spectateur se déplace latéralement, l'angle de vision change et des tuiles de qualité peuvent être sélectionnées pour la zone de la séquence la plus proche de l'utilisateur. Ce cas ne fait pas partie de l'objet revendiqué.

La donnée représentative de l'activité des spectateurs peut aussi correspondre à la distance entre au moins un spectateur et l'écran sur lequel est restituée la séquence. La qualité peut ainsi être adaptée selon la distance entre l'écran et un spectateur de façon à augmenter par exemple la résolution de l'image lorsque le spectateur est près de l'écran et la réduire lorsque le spectateur s'en éloigne. Ce cas ne fait pas partie de l'objet revendiqué.

Le terme tuile correspond ici à une zone rectangulaire définie spatialement pour une image ou un groupe d'image. Dans le contexte de l'invention, les images composant la séquence vidéo sont partitionnées en tuiles, les tuiles étant encodées de façon telle qu'elles peuvent être décodées de manière indépendante les unes des autres. Par exemple, la norme de codage vidéo HEVC (ISO/IEC 23008-2 MPEG-H Part 2 et ITU-T H.265) défini la notion de tuiles (« tiles » en anglais) pour permettre la parallélisation des processus d'encodage et de décodage et offre les outils nécessaires à un encodage vidéo tel que les tuiles puissent être décodées indépendamment les unes des autres. Par exemple, les images peuvent être partitionnées selon une grille régulière de 8x8 tuiles. Selon un autre exemple, le partitionnement peut être irrégulier et comporter des tuiles de grande taille en haut et en bas de l'écran, comme par exemple des tuiles de même largeur que l'image et de hauteur égale à % de la hauteur de l'image, et un ensemble de tuiles de petite taille au centre de l'image. Une telle disposition permet d'adapter plus finement la qualité dans la zone centrale de l'image.

La représentation intermédiaire est ainsi composée de tuiles décodables de façon indépendante et issues d'au moins deux des représentations disponibles. En ajustant le nombre de tuiles en provenance de l'une et l'autre des deux représentations, on peut obtenir différentes variantes de la représentation intermédiaire, sans le surcoût induit par les techniques de scalabilité classiques. D'autre part, contrairement aux techniques classiques d'encodage multi-débits, cette nouvelle représentation n'occupe pas d'espace supplémentaire sur les serveurs de diffusion. Le procédé peut ainsi permettre à un système de streaming vidéo d'adapter de façon optimale le flux vidéo à la bande passante disponible sans nécessiter l'hébergement de nombreuses versions d'un même contenu et sans provoquer de consommation accrue de la bande passante.

Ainsi, les tuiles sont sélectionnées en fonction d'au moins un point observé par au moins un utilisateur, et selon les différentes représentations et la bande passante disponible. Selon un critère de qualité, par exemple selon leur débit d'encodage, dans l'une ou l'autre des différentes représentations. Le procédé de composition permet ainsi de sélectionner judicieusement des tuiles dans différentes représentation disponibles de façon à composer un flux dont le débit n'excède pas une limite fixée au préalable pour correspondre par exemple à la bande passante disponible sur le réseau. Le procédé permet ainsi de contraindre la représentation particulière à un débit maximum. Par exemple, le critère de débit maximum peut être défini par une mesure de la bande passante disponible entre le terminal de restitution et un serveur de diffusion ou estimée à partir du niveau de remplissage d'une mémoire tampon d'un dispositif de décodage du flux vidéo. Le procédé est ainsi apte à composer une représentation dont le débit est optimal au regard des conditions réseau.

Selon une autre réalisation particulière, le procédé est tel qu'il comprend en outre des étapes de :
- Calcul du débit résultant de la représentation intermédiaire,
- Vérification que le débit résultant n'excède pas un seuil prédéterminé, et
- Sélection d'un nouvel ensemble de tuiles lorsque le débit résultant est supérieur au seuil prédéterminé.

Ainsi, lorsque les représentations à partir desquelles une nouvelle représentation est composée sont respectivement encodées à un premier débit et à un second débit, le procédé permet avantageusement d'obtenir une représentation dont le débit est compris entre celui de la première représentation et celui de la seconde représentation. En faisant varier le nombre de tuiles issues de l'une et l'autre des représentations, le procédé permet d'offrir des représentations à différents débits afin d'adapter finement le débit du flux vidéo à la bande passante disponible.

Selon une réalisation particulière, la représentation intermédiaire est composée à la demande, au fur et à mesure du décodage. La proportion de tuiles provenant de l'une ou l'autre des représentations pour composer la représentation intermédiaire peut alors varier au cours du temps en fonction de la bande passante disponible sur la connexion. Le procédé permet ainsi d'ajuster la qualité de la représentation en fonction de la bande passante disponible à un instant donné.

Le procédé peut également comprendre, selon une autre réalisation particulière, une étape préalable d'obtention d'une information relative à la bande passante disponible sur le réseau.

Selon une réalisation particulière, le procédé est tel que la donnée de contexte comprend une indication relative au fait qu'aucun spectateur n'est à proximité du terminal, et que l'étape de sélection comprend la sélection d'un minimum de tuiles dans la représentation de plus haute qualité...

De cette façon, le procédé permet de réduire la qualité de la vidéo lorsqu'aucun spectateur n'est à proximité du terminal de restitution.

Selon un mode de réalisation particulier, le procédé est tel que la donnée de contexte comprend une indication relative à un emplacement sur l'image, l'emplacement correspondant à une zone de l'écran d'un terminal observée par au moins un spectateur et que l'étape de sélection comprend la sélection de tuiles dans la représentation de plus haute qualité pour la partie de l'image correspondant à l'emplacement indiqué.

Un dispositif de suivi du regard est par exemple associé au terminal de restitution et permet d'obtenir les coordonnées d'une zone ou d'un point sur l'écran du terminal de restitution vers lequel un spectateur dirige son regard. Lorsque la donnée de contexte comprend une telle information, des tuiles de bonne qualité peuvent être sélectionnées pour les emplacements observés par un spectateur. Une telle disposition permet d'améliorer la qualité perçue par le spectateur, tout en réduisant le débit de la représentation intermédiaire composée.

L'invention trouve également un avantage lorsque la séquence vidéo est une vidéo panoramique restituée par l'intermédiaire d'un dispositif de vision à 360° tel qu'un casque virtuel porté par un utilisateur. Dans cette configuration, seule la partie de l'image correspondant à l'orientation et au champ de vision de l'utilisateur est restituée dans le casque. Toutefois, les différentes images composant la séquence sont téléchargées dans leur intégralité afin d'offrir une expérience utilisateur fluide lorsqu'il change brusquement d'orientation. Le procédé permet d'améliorer l'expérience utilisateur dans ce cas de figure. L'indication relative à un emplacement sur l'image correspond dans ce cas à l'orientation de l'utilisateur par rapport à une position initiale. Il peut s'agir par exemple de la valeur d'un angle de rotation par rapport à une orientation initiale de l'utilisateur selon un ou plusieurs axes. L'orientation de l'utilisateur peut être déterminée aux moyens de capteurs tels que des accéléromètres, gyroscopes ou boussole intégrés au casque virtuel. Le procédé permet ainsi de composer une séquence vidéo dans laquelle des tuiles de bonne qualité sont sélectionnées pour la zone de l'image affichée dans le casque alors que des tuiles de moins bonne qualité sont sélectionnées pour les zones de la vidéo qui sont hors du champ de vision de l'utilisateur portant le casque. Il est ainsi possible d'améliorer l'expérience utilisateur en réservant la plus grande partie de la bande passante à la partie de la séquence vidéo qui est effectivement visible par l'utilisateur.

Selon un mode particulier de réalisation qui ne fait pas partie de l'objet revendiqué, la donnée de contexte comprend également la durée de fixation d'un emplacement particulier de l'image.

Le dispositif de suivi du regard associé au terminal peut également mesurer le temps pendant lequel un utilisateur fixe un point de l'image. Lorsque le temps de fixation mesuré dépasse un seuil prédéterminé, comme par exemple 4 secondes, il est possible de prédire que l'utilisateur va commencer à parcourir du regard le reste de l'image. Des tuiles de bonne qualité peuvent alors être sélectionnées à d'autres emplacements de l'image.

Selon un mode particulier de réalisation, le procédé est tel que la sélection d'une tuile est réalisée en fonction d'au moins un critère de sélection d'au moins une tuile adjacente.

Le procédé permet ainsi de s'assurer que des tuiles adjacentes dans le flux composé ne présentent pas une différence de qualité importante. Par exemple, lorsqu'une représentation intermédiaire est composée à partir de 3 représentations pré-encodées de qualité différente, le procédé peut éviter qu'une tuile provenant de la représentation de la plus basse qualité soit adjacente à une tuile provenant de la représentation de la plus haute qualité. Le procédé permet ainsi de réaliser un lissage rendant moins perceptible les différences de qualité de tuiles contigües.

L'invention concerne également un procédé de téléchargement d'une représentation intermédiaire sur un terminal tel que défini dans la revendication 6.

Par exemple, un terminal de décodage qui souhaite télécharger un contenu peut déterminer si le serveur est apte à lui fournir une représentation adaptée à sa connexion réseau. Si le serveur indique qu'il a la capacité à composer une représentation intermédiaire, le terminal peut déterminer une donnée de contexte représentative de l'activité de spectateurs. Par exemple, le terminal peut déterminer une telle donnée de contexte à partir d'un capteur de type caméra associé à une unité de traitement configurée pour analyser les images capturées et détecter l'arrivée et le départ de spectateurs, ou suivre leur regard pour déterminer des zones de l'écran observées. Le procédé permet ainsi à un serveur de diffusion ou un terminal mettant en œuvre le procédé de composer une représentation intermédiaire d'une séquence vidéo dont la qualité perçue par les spectateurs est optimale.

Lorsqu'un spectateur arrive à proximité d'un terminal de restitution tel qu'une télévision, son regard se porte généralement au centre de l'écran. Ainsi, le procédé prévoit de déterminer une donnée de contexte relative au fait qu'un nouveau spectateur est à proximité du terminal, cette donnée permettant de sélectionner des tuiles de bonne qualité au centre de l'image et des tuiles de moins bonne qualité sur les pourtours. L'arrivée d'un nouveau spectateur peut par exemple être détectée par un système de détection de visage ou de reconnaissance faciale.

Selon un mode particulier de réalisation, la donnée de contexte comprend une indication relative au fait qu'aucun spectateur n'est à proximité du terminal.

Une telle disposition permet la composition d'une représentation de basse qualité lorsqu'aucun spectateur n'est à proximité du terminal de restitution. De cette façon, la bande passante utilisée est réduite sans affecter la qualité perçue par les spectateurs. Ceci participe à réduire la consommation d'énergie liée à la diffusion d'un contenu lorsque personne ne le regarde.

Selon un mode de réalisation particulier, la donnée de contexte comprend une indication relative à un emplacement sur l'image, l'emplacement correspondant à une zone de l'écran du terminal observée par au moins un spectateur.

L'utilisation de techniques de suivi du regard permet la détermination d'une zone de l'écran observée par un spectateur. Une telle information de contexte permet la composition d'une représentation dont les tuiles de qualité supérieure sont disposées à l'endroit où le spectateur porte son regard.

L'invention concerne aussi un dispositif de composition tel que défini dans la revendication 9..

L'invention concerne également un serveur comprenant un dispositif de composition tel que décrit ci-dessus.

L'invention concerne également un terminal comprenant un dispositif de composition tel que décrit ci-dessus.

Selon un autre aspect, l'invention concerne également un dispositif de téléchargement d'une représentation intermédiaire tel que défini dans la revendication 12.

Selon une réalisation particulière, l'invention concerne un terminal de décodage comprenant un dispositif de téléchargement d'une représentation intermédiaire.

L'invention concerne également un programme d'ordinateur comportant des instructions pour l'exécution des étapes du procédé de composition et/ou pour l'exécution des étapes du procédé de téléchargement, lorsque ledit programme est exécuté par un processeur.

Enfin, l'invention concerne un support d'informations lisible par un processeur sur lequel est enregistré un programme d'ordinateur comprenant des instructions pour l'exécution des étapes du procédé de et/ou des instructions pour l'exécution du procédé de téléchargement.

Le support d'informations peut être n'importe quelle entité ou dispositif capable de stocker le programme. Par exemple, le support peut comporter un moyen de stockage, tel qu'une

ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de composition et/ou du procédé de téléchargement tels que définis ci-dessus.

Les serveurs, dispositifs et programmes présentent au moins des avantages analogues à ceux conférés par le procédé de composition décrit ci-dessus.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La **figure 1** représente une architecture réseau simplifiée adaptée pour la mise en oeuvre de l'invention selon un mode de réalisation particulier,
- Les **figures 2a, 2b et 2c** représentent un exemple de composition d'un flux vidéo à partir de deux représentations d'un même flux offrant une qualité d'image différente,
- La **figure 3** illustre les principales étapes du procédé de composition selon un mode particulier de réalisation,
- Les **figures 4a et 4b** représentent, à titre d'exemples, deux façons d'agencer des tuiles provenant de différentes représentations.
- La **figure 5** illustre l'architecture d'un dispositif adapté pour mettre en oeuvre le procédé de composition selon une réalisation particulière.
- La **figure 6** illustre l'architecture d'un dispositif adapté pour mettre en oeuvre le procédé de composition selon une autre réalisation particulière.
- La **figure 7** illustre l'architecture d'un dispositif adapté pour mettre en oeuvre le procédé de téléchargement d'une représentation selon un mode de réalisation particulier.

### DESCRIPTION DÉTAILLÉE D'UN MODE DE RÉALISATION

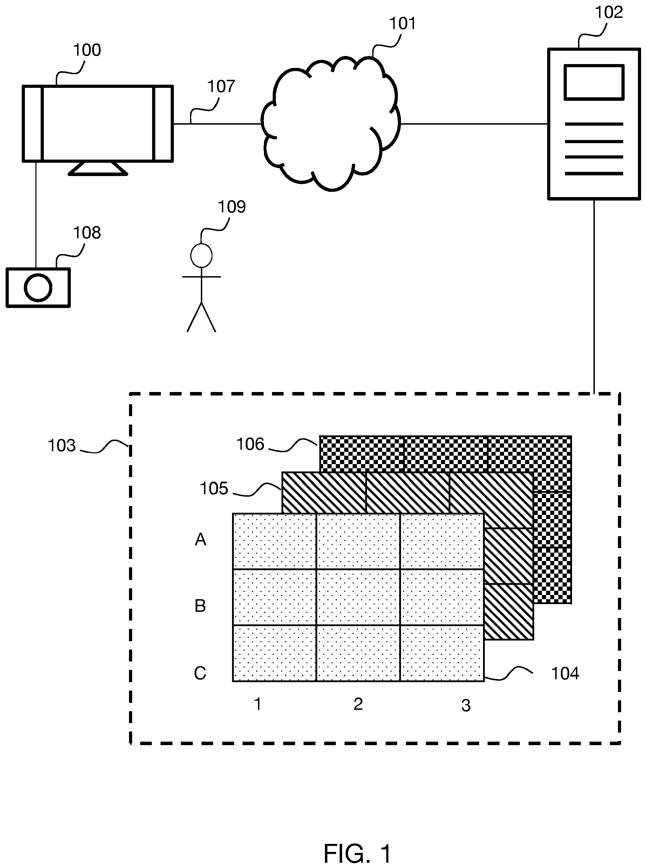

La **figure 1** représente une architecture simplifiée dans laquelle est mis en oeuvre le procédé de composition selon l'invention.

Une telle architecture comprend un terminal client 100 adapté pour restituer une séquence audiovisuelle, un réseau de communication 101 et un serveur de diffusion de contenus 102. Le serveur de diffusion de contenus 102 est adapté pour fournir un contenu au terminal 100 par l'intermédiaire du réseau 101 qui peut être par exemple un réseau de type IP (pour Internet Protocol en anglais). Le terminal 100 est connecté au réseau 101 par l'intermédiaire d'une liaison 107. L'architecture comporte également un dispositif 108 associé au terminal 100 et adapté pour détecter un contexte de visualisation de la séquence. Il s'agit par exemple d'une caméra vidéo, une caméra infrarouge ou tout autre capteur adapté pour déterminer la présence de spectateurs et leur activité. Par exemple, le dispositif 108 peut capturer des images de l'environnement et effectuer des traitements sur ces images afin de déterminer un contexte de visualisation de la séquence. En particulier, le dispositif 108 capture des images d'un ou plusieurs spectateurs 109 à proximité du terminal 100 afin de déterminer leur nombre et leur attitude.

Dans cet exemple, le serveur de diffusion met à disposition du terminal 100 un contenu audiovisuel 103. Le serveur 102 héberge différentes représentations du contenu, chacune des représentations étant disponible selon un profil d'encodage particulier. Par exemple, le contenu audiovisuel 103 a été encodé au préalable en une première représentation 104 codée à 500KB/s, une deuxième représentation 105 codée à 2Mo/s et une troisième représentation 106 codée à 4Mo/s. De cette façon, le serveur 102 peut fournir au terminal 100 une version du contenu audiovisuel adaptée à la bande passante dont il dispose. Par exemple, si la connexion 107 autorise un débit maximum de 1Mo/s, le serveur 102 pourra lui fournir la représentation 500KB/s de façon à garantir une bonne qualité de service. De manière classique, les différentes représentations disponibles pour le contenu 103 sont annoncées dans un fichier manifeste téléchargeable par le terminal 100 afin que celui-ci puisse demander la fourniture de la représentation la plus adaptée.

Dans l'exemple présenté ici pour illustrer l'invention, l'architecture de streaming est basée sur l'utilisation du protocole HTTP (pour HyperText Transport Protocol) et met en oeuvre la norme MPEG DASH (pour « Dynamic Adaptative Streaming over HTTP » en anglais). Il s'agit de la norme ISO/IEC 23009-1 :2012(E) dédié au streaming de contenus multimédias sur Internet. Le codage du contenu vidéo est ici réalisé selon la norme HEVC (High Efficiency Video Coding, ISO/IEC 23008-2 MPEG-H Part 2 et ITU-T H.265).

Lors de l'encodage des différentes représentations, l'encodeur vidéo a été configuré d'une manière adaptée pour que les images qui composent la séquence soient divisées en régions rectangulaires appelées « tuiles » formant une partition des images selon une grille prédéfinie. La partition des images en tuiles est une option offerte par exemple par la norme HEVC dans le but de permettre une parallélisation des processus d'encodage et de décodage sur les architectures informatiques multi-coeurs et/ou multi-processeurs. Par exemple, la séquence vidéo peut être partitionnée en tuiles selon la méthode décrite dans la demande de brevet US2014307775 « METHOD AND DEVICE FOR PARTITIONING AN IMAGE ».

Par exemple, pour garantir une indépendance des tuiles lors du décodage, les vecteurs de mouvement sont contraints à l'intérieur des tuiles. Ainsi, le décodage d'une tuile ne nécessite pas d'information contenue dans une autre tuile. D'autre part, pour éviter la propagation d'information d'une tuile à l'autre lors de l'application de filtres « in-loop » tels que le « deblocking filter » ou le « Sample Adaptative Offset filter », ces filtres sont désactivés aux frontières des tuiles en positionnant le paramètre « loop_filter_accross_tiles_enabled_flag » à zéro dans le PPS (Picture Parameter Set). Selon le standard HEVC, les tuiles sont définies dans le PPS (Picure Parameter Set). Le PPS contient des éléments qui spécifient le nombre de tuiles en lignes et de colonnes dans une image ainsi que leur taille. Une séquence vidéo HEVC est divisée en différents segments de données qui contiennent en particulier les données des tuiles et l'emplacement de ces données dans le segment. Une entête de segment comporte des informations sur le contenu et les paramètres du segment, et en particulier des données permettant d'accéder aux données des tuiles.

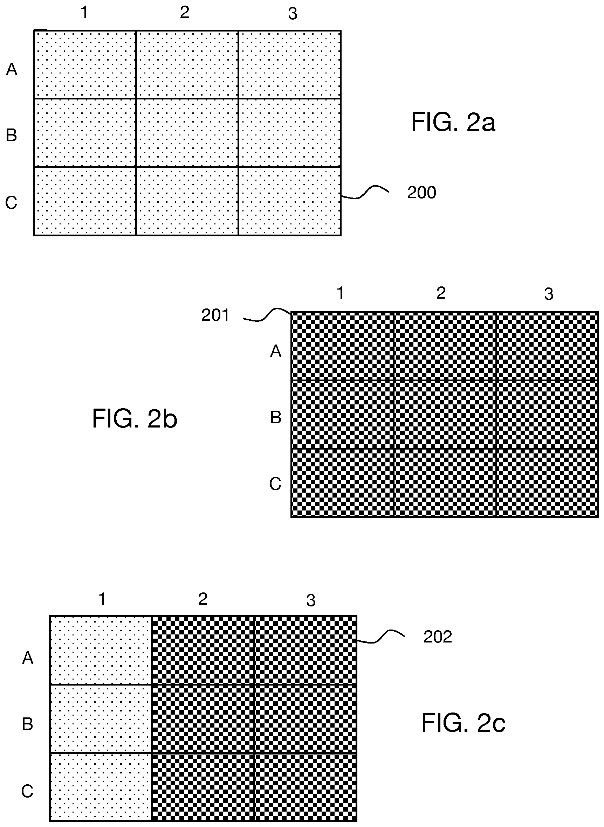

Les **figures 2a et 2b** illustrent un exemple de partitionnement d'une séquence vidéo. La figure 2a illustre une première représentation 200 de basse qualité d'une séquence vidéo. Les images de cette séquence sont divisées en 9 tuiles selon une grille de 3 lignes et 3 colonnes. La figure 2b illustre une seconde représentation 201 de la même séquence, encodée en haute qualité. Les images correspondant au même instant dans la représentation 200 et la représentation 201 sont partitionnées de manière identique. Ces représentations ont été encodées avec les précautions décrites ci-avant de manière à ce que les tuiles soient décodables indépendamment les unes des autres. Par exemple, la tuile C2 de la représentation 200 ne comporte pas de référence à des informations contenues dans les tuiles adjacentes et peut être décodée indépendamment des autres tuiles de l'image. En revanche, cette tuile C2 peut comporter des références à cette même tuile C2 dans les images précédentes ou suivantes, lorsqu'elles font partie du même GoP (Group Of Picture).

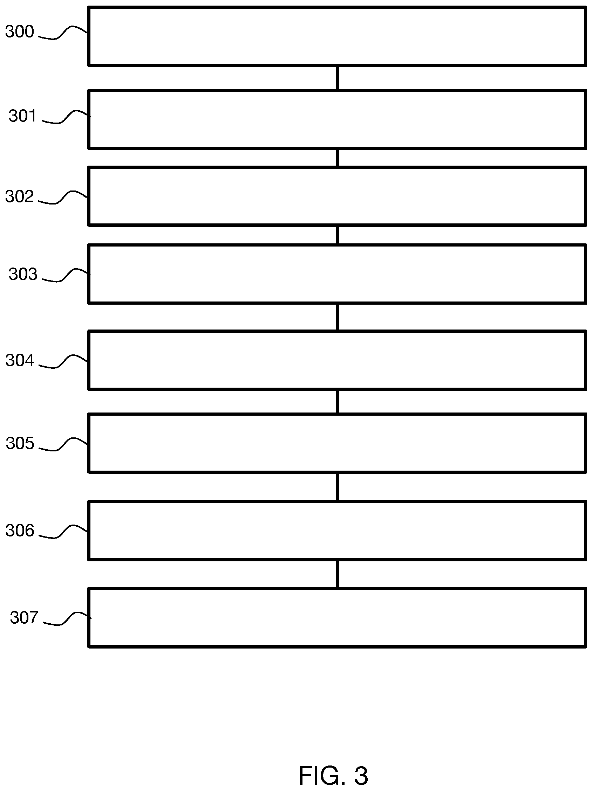

On se réfère maintenant à **la** **figure 3** qui illustre les principales étapes du procédé de composition selon un mode particulier de réalisation dans lequel le procédé est implémenté sur le serveur 102.

Lors d'une étape préalable **300**, une séquence vidéo est encodée conformément à la norme HEVC, selon différents profils d'encodage. L'encodeur vidéo est configuré de manière à partitionner les images en tuiles décodables indépendamment les unes des autres comme décrit ci-avant. La configuration des tuiles dans les différentes représentations est identique pour un instant donné. Les différentes représentations de la séquence sont mises à disposition des utilisateurs sur un serveur, chacune étant accessibles au travers d'une URL (Uniform Resource Locator) particulière. Les différentes représentations disponibles ainsi que leurs caractéristiques sont consignées dans un fichier MPD (Media Présentation Description). Par exemple, le fichier MPD (également appelé « manifeste ») peut comprendre, pour chacune des représentations disponibles, des URLs d'accès aux différents segments d'une représentation, le débit d'encodage, la résolution vidéo, un index des segments... Une représentation est par exemple déclarée de la manière suivante dans un fichier manifeste conforme à la norme DASH :

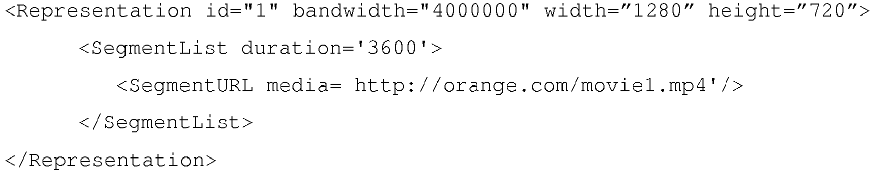

À l'étape 301, le serveur reçoit une requête de téléchargement d'un fichier manifeste. La requête provient d'un terminal comme par exemple le terminal 100 de la figure 1 dont la connexion 107 est limitée à 1 Mo/s.

Lors de l'étape **302**, le serveur transmet au terminal un fichier manifeste décrivant les représentations disponibles pour une séquence vidéo. Ce fichier comporte en outre une indication représentative de la capacité du serveur à composer une représentation intermédiaire de la séquence vidéo. Ainsi, le terminal de décodage 100 peut déterminer, à la réception du fichier manifeste, que le serveur est apte à générer des représentations intermédiaires de la séquence. Pour cela, le serveur peut indiquer un paramètre particulier dans la déclaration d'une représentation. Par exemple, la déclaration suivante utilise à cette fin la valeur particulière « custom » dans l'attribut « bandwidth » :

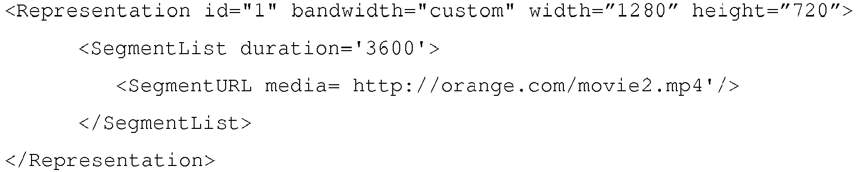

Cette indication peut également être communiquée par d'autres moyens, comme par exemple en utilisant un paramètre, une valeur ou un attribut particulier dans l'entête du fichier manifeste.

À la réception du manifeste, le terminal 100 peut alors requêter une représentation optimale au regard du contexte de visualisation de la séquence et d'au moins un critère de débit maximum de la représentation intermédiaire résultant de la composition. Pour cela, il peut émettre une requête de téléchargement vers l'URL indiquée dans le manifeste, la requête comprenant en particulier une donnée de contexte représentative de l'activité de spectateurs situés proximité du dispositif de restitution et, selon une réalisation particulière de l'invention, et une indication du débit maximum souhaité pour la représentation. La requête comporte un critère d'obtention d'une représentation intermédiaire qui peut être un critère de qualité souhaité ou dans l'exemple décrit ici, un critère de débit maximal souhaité. La donnée de contexte est par exemple communiquée périodiquement au serveur via un paramètre d'une requête http.

La donnée de contexte est représentative de l'activité de spectateurs situés proximité du dispositif de restitution. La donnée de contexte reçue par le serveur 102 contient :
- une indication selon laquelle un nouveau spectateur 109 est détecté à proximité du terminal 100, et peut contenir
- une indication selon laquelle un spectateur 109 n'est plus détecté à proximité du terminal 100,
- une indication selon laquelle le regard d'un spectateur 109 est dirigé vers une zone particulière de l'écran du terminal 100. Par exemple, une telle indication peut comprendre les coordonnées d'un point ou d'une zone de l'image vers lequel est dirigé le regard d'au moins un spectateur. En cas de pluralité de spectateurs, une pluralité de points ou de zones peut être transmise ; ce cas n'est pas compris dans l'invention revendiquée.

Selon un mode de réalisation particulier, la donnée de contexte est envoyée avec en outre une indication de débit maximum requis de la représentation intermédiaire résultant de la composition. Par exemple, le terminal 100 peut indiquer qu'il souhaite télécharger une représentation intermédiaire dont le débit n'excède pas la bande passante de la liaison 107, c'est-à-dire 1Mo/s.

Ainsi, le serveur reçoit à l'étape 303 une requête d'accès au contenu comprenant au moins une donnée de contexte relative à l'activité d'au moins un spectateur.

À l'étape **304**, le serveur 102 obtient un débit vidéo maximum souhaité par le terminal de décodage. À partir de cette information de débit, le serveur sélectionne parmi les représentations préencodées dont il dispose, une première représentation préencodée dont le débit est inférieur au débit maximum indiqué par le terminal et une seconde représentation préencodée dont le débit est supérieur au débit maximum indiqué par le terminal. Par exemple, à la réception d'une requête indiquant un débit maximum de 1Mo/s, le serveur 102 sélectionne une première représentation 104 encodée à 500KB/s et une seconde représentation 105 encodée à 2Mo/s.

Lors d'une étape **305**, le serveur sélectionne un ensemble de tuiles formant une partition des images de la séquence et composé de tuiles provenant de la première et de la seconde représentation, chaque tuile étant associée à des données compressées dans ladite représentation, afin d'obtenir une représentation intermédiaire adaptée au contexte de visualisation de la séquence vidéo, et dont le débit est compris entre le débit d'encodage de la première représentation et le débit d'encodage de la seconde représentation. Pour cela, le serveur 102 utilise la donnée de contexte représentative de l'activité de spectateurs situés proximité du dispositif de restitution obtenue pour sélectionner une tuile dans l'une ou l'autre des représentations sélectionnées à l'étape 304.

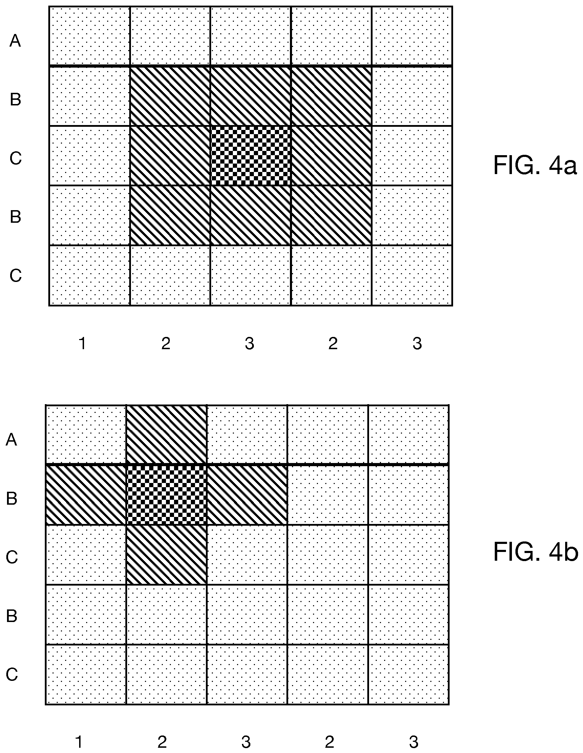

Par exemple, lorsque la donnée de contexte comprend une indication relative au fait qu'un nouveau spectateur est à proximité du terminal, le serveur peut sélectionner des tuiles dans l'une et l'autre des représentations sélectionnées de manière à ce que des tuiles de haute qualité soient situées au centre de la vidéo et que des tuiles de moins bonne qualité soient situées sur les pourtours de la vidéo. Un tel agencement de tuiles est par exemple représenté sur la figure 4a. Une telle disposition est particulièrement avantageuse lorsqu'un nouveau spectateur est détecté car il a été constaté que lorsqu'une personne arrive à proximité d'un écran sur lequel est restitué une vidéo, son regard se porte en premier lieu au centre de la vidéo.

Selon un autre exemple, lorsque la donnée de contexte comprend une indication relative au fait qu'aucun spectateur n'est à proximité du terminal, le serveur peut sélectionner des tuiles parmi des représentations de basse qualité. Une telle disposition permet de réduire le débit de la séquence vidéo transmise lorsqu'aucun spectateur ne se trouve devant le terminal de restitution.

Selon encore un autre exemple, lorsque la donnée de contexte comprend une indication relative à un emplacement observé par au moins un spectateur sur l'écran du terminal, le serveur 102 peut sélectionner des tuiles correspondant à l'emplacement observé dans une représentation de haute qualité et sélectionner les tuiles correspondant aux autres emplacements dans une représentation de plus basse qualité. En référence à la figure 4b, le procédé permet ainsi d'assurer une bonne qualité de vidéo à l'endroit ou un spectateur porte son regard lorsque la donnée de contexte comprend une indication selon laquelle un spectateur observe la zone B2 de l'écran.

Selon une réalisation particulière, à partir d'une première représentation 200 illustrée à la **figure 2a** et d'une seconde représentation 201 illustrée à la **figure 2b**, le serveur peut composer une représentation intermédiaire 202 illustrée à la **figure 2c** à partir des données compressées associées à l'ensemble de tuiles sélectionné. La figure 2c est ainsi composée d'un ensemble de tuiles {A1, B1, C1} issues de la première représentation 200 et d'un ensemble de tuiles {A2, B2, C2, A3, B3, C3} issues de la seconde représentation 201. Le débit de la représentation 202 est ainsi compris entre le débit de la première représentation 200 et celui de la seconde représentation 201. Une telle sélection peut être réalisée suite à l'obtention d'une indication relative au fait qu'un spectateur observe la partie droite de l'écran. Il est ainsi possible de limiter la bande passante nécessaire à la transmission de la séquence vidéo tout en préservant la qualité perçue par le spectateur.

A ce stade, selon un mode particulier de réalisation, le serveur peut calculer le débit de la représentation composée de façon à le comparer avec le débit maximal indiqué par le terminal de décodage. Ainsi, si le débit de la représentation intermédiaire composée est supérieur au débit maximal indiqué par le terminal de décodage, le serveur peut sélectionner un nouvel ensemble de tuiles à partir des représentations, le nouvel ensemble comprenant une part plus importante de tuiles provenant de la représentation dont le débit est inférieur au débit indiqué par le terminal. Ainsi, après un certain nombre d'itérations, le serveur peut obtenir une représentation intermédiaire dont le débit est optimal au regard de la contrainte fixée par le terminal de décodage.

Selon une autre réalisation particulière, l'ensemble de tuiles sélectionné initialement peut comprendre toutes les tuiles d'une représentation à l'exception d'une tuile dont l'emplacement est déterminé relativement à la donnée de contexte reçue, et notamment relativement à l'indication relative à l'activité d'au moins un spectateur, les tuiles d'une autre représentation étant ajoutées une à une à chaque itération, tant que le débit de la composition n'est pas optimal au regard de la limite fixée par le terminal. Par exemple, un premier ensemble de tuiles peut être constitué des tuiles {B1, C1, A2, B2, C2, A3, B3, C3} provenant de la représentation de haute qualité 201 de la **figure 2b** et de la seule tuile {A1} provenant de la représentation 200. Si le débit de la composition résultante est supérieur au seuil fixé par le terminal, le serveur modifie le premier et le second ensemble de façon à remplacer une tuile de haute qualité par une tuile de basse qualité. Pour cela, le premier ensemble peut comporter les tuiles {C1, A2, B2, C2, A3, B3, C3} issues de la représentation 201 et le second ensemble les tuiles {A1, B1} issues du second ensemble. Les étapes sont ainsi répétées jusqu'à ce que le débit de la composition résultante soit inférieur ou égale au débit maximal fixé.

Selon un mode particulier de réalisation, une tuile est sélectionnée en fonction de la sélection réalisée pour des tuiles adjacentes. Par exemple, lorsqu'une représentation intermédiaire est composée à partir des données compressées associées à aux tuiles provenant des trois représentations 104, 105 et 106 préencodées illustrées à la **figure 1****,** il peut arriver qu'une première tuile soit sélectionnée dans la représentation de basse qualité 104 et qu'une tuile adjacente à cette première tuile soit sélectionnée dans la représentation 106 de haute qualité. Le fait que ces tuiles de qualité très différente soient contigües pose un problème d'homogénéité de l'image composée et peut porter préjudice à la qualité perçue par l'utilisateur. Pour éviter cela, le procédé propose de sélectionner une tuile dans une représentation particulière en fonction des choix effectués pour les tuiles adjacentes. Par exemple, la **figure 4b** illustre une représentation intermédiaire composée à partir de tuiles issues des représentations préencodées 104, 105 et 106 décrites en référence à la **figure 1**. Une tuile de haute qualité a été sélectionnée à la position B2, au centre de l'image. Il s'agit par exemple d'un emplacement observé par un spectateur. Les tuiles adjacentes A2, B1, C2 et B3 sont alors sélectionnées dans la représentation de qualité moyenne 105, les tuiles A1, C1, A3 et C3 étant sélectionnées dans la représentation de basse qualité 104. De cette façon, le procédé peut limiter les écarts de qualité en bordure de tuiles.

À l'étape 306, lorsqu'un ensemble de tuiles satisfaisant au critère de débit maximum de la représentation est sélectionné, le serveur peut extraire les données correspondantes lorsqu'elles sont demandées par le terminal de décodage. Les données correspondant à une tuile particulière d'une représentation peuvent être obtenues par exemple selon la méthode décrite dans la demande de brevet US2014307775 « METHOD AND DEVICE FOR PARTITIONING AN IMAGE ». À partir des données des tuiles, chaque image codée est reconstruite puis transmise au terminal de décodage lors d'une étape 307.

Selon une réalisation particulière, le procédé est mis en oeuvre sur un terminal de décodage. Dans ce cas de figure, le terminal utilise le fichier MPD afin de connaître les URLs d'accès aux segments des différentes représentations disponibles. Pour un segment donné, le terminal télécharge à partir d'au moins deux représentations les données du segment lui permettant de sélectionner un ensemble de tuiles. Par exemple, le terminal peut télécharger, à l'aide d'une requête « byte-range », les SIDX (Segment Index), SSIX (SubSegment IndeX), PPS (Picture Parameter Set), SPS (Segment Parameter Set) et SEI (Supplemental Enhancement Information) afin de connaitre la disposition des tuiles dans l'image et l'emplacement des données correspondant à ces tuiles dans le segment. Le terminal dispose alors des informations nécessaires à l'exécution des étapes 305 et 306 décrites en référence à la **figure 3****.**

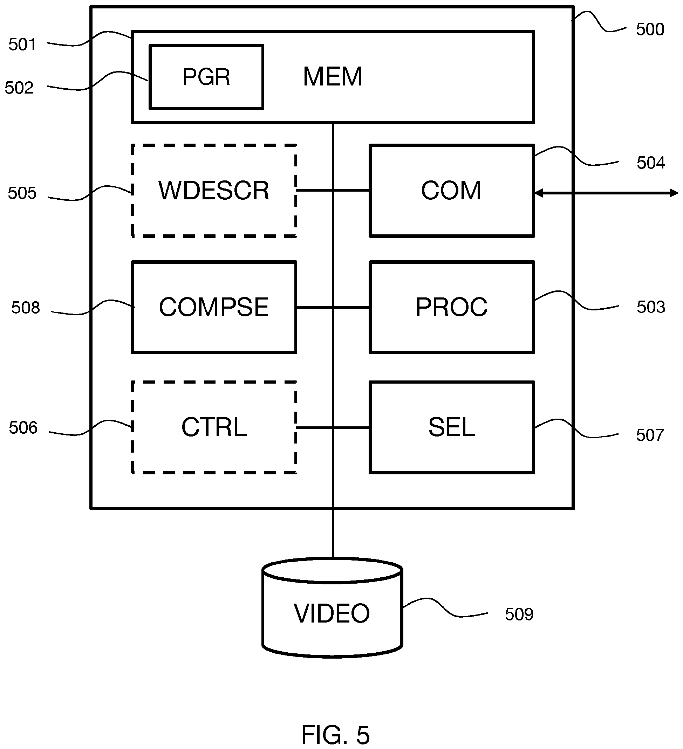

La **figure 5** illustre un dispositif 500 mettant en oeuvre le procédé de composition, selon un mode particulier de réalisation de l'invention. Le dispositif comprend un espace de stockage 501, par exemple une mémoire MEM, une unité de traitement 503 équipée par exemple d'un processeur PROC. L'unité de traitement peut être pilotée par un programme 502, par exemple un programme d'ordinateur PGR, mettant en oeuvre le procédé de composition d'une représentation intermédiaire tel que décrit dans l'invention en référence à la figure 3, et notamment les étapes d'obtention d'une donnée de contexte représentative de l'activité de spectateurs situés proximité du dispositif de restitution, de sélection, selon la donnée de contexte obtenue et au moins un critère de débit maximum de la représentation intermédiaire résultant de la composition, d'un ensemble de tuiles formant une partition de la séquence et composé de tuiles provenant des au moins deux représentations, et de composition d'une représentation intermédiaire de la séquence vidéo à partir des données compressées de l'ensemble de tuiles sélectionné.

À l'initialisation, les instructions du programme d'ordinateur 502 sont par exemple chargées dans une mémoire RAM (Random Access Memory en anglais) avant d'être exécutées par le processeur de l'unité de traitement 503. Le processeur de l'unité de traitement 503 met en oeuvre les étapes du procédé de composition selon les instructions du programme d'ordinateur 502.

Pour cela, le dispositif comprend, outre la mémoire 501, des moyens de communication 504 (COM) permettant au dispositif de se connecter à un réseau de télécommunication et d'échanger des données avec d'autres dispositifs par l'intermédiaire du réseau de télécommunications, et par exemple de recevoir des requêtes de téléchargement d'un fichier manifeste ou d'au moins une partie d'une représentation d'un contenu vidéo. Ces moyens de communication peuvent par exemple être une interface réseau et peuvent également servir à transmettre un fichier manifeste comportant une indication représentative d'une capacité du dispositif à composer une représentation intermédiaire d'une séquence vidéo et/ou au moins une partie d'une représentation d'un contenu vidéo. Les moyens de communication peuvent également servir à obtenir une donnée de contexte représentative de l'activité de spectateurs situés proximité du terminal de restitution sur lequel est restitué la séquence vidéo. Le dispositif comprend également une unité 507 de sélection, selon la donnée de contexte obtenue et au moins un critère de débit maximum de la représentation intermédiaire résultant de la composition, d'un ensemble de tuiles formant une partition de la séquence et composé de tuiles provenant des au moins deux représentations, et une unité 508 de composition d'une représentation intermédiaire de la séquence vidéo à partir des données compressées de l'ensemble de tuiles sélectionné. Selon un mode particulier de réalisation, le dispositif peut également comprendre une unité 505 (WDESCR) de génération d'une indication représentative d'une capacité à composer une représentation intermédiaire d'une séquence vidéo et une unité 506 (CTRL) de calcul du débit résultant de la représentation intermédiaire et de vérification que le débit résultant est inférieur à un seuil prédéterminé. Selon un autre mode de réalisation, le dispositif peut comprendre une base de données 509 pour l'enregistrement de représentations intermédiaires sous la forme d'une description de l'assemblage de tuiles et des représentations préencodées dont elles sont issues.

Selon un mode particulier de réalisation, le dispositif peut être intégré dans un serveur, comme par exemple un serveur de diffusion vidéo.

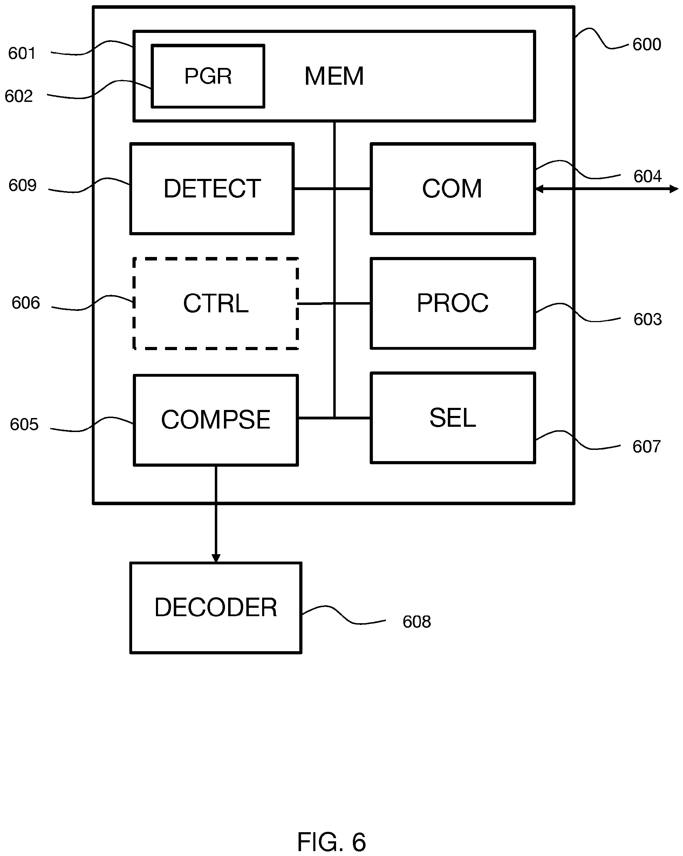

La **figure 6** illustre un autre dispositif 600 mettant en oeuvre le procédé de composition selon un mode particulier de réalisation de l'invention adapté pour être utilisé dans un terminal de décodage vidéo. Le dispositif comprend un espace de stockage 601, par exemple une mémoire MEM, une unité de traitement 603 équipée par exemple d'un processeur PROC. L'unité de traitement peut être pilotée par un programme 602, par exemple un programme d'ordinateur PGR, mettant en oeuvre le procédé de composition d'une représentation intermédiaire tel que décrit dans l'invention, et notamment les étapes d'obtention d'une donnée de contexte représentative de l'activité de spectateurs situés proximité du dispositif de restitution, de sélection, selon la donnée de contexte obtenue et au moins un critère de débit maximum de la représentation intermédiaire résultant de la composition, d'un ensemble de tuiles formant une partition de la séquence et composé de tuiles provenant des au moins deux représentations, et de composition d'une représentation intermédiaire de la séquence vidéo à partir des données compressées de l'ensemble de tuiles sélectionné.

À l'initialisation, les instructions du programme d'ordinateur 602 sont par exemple chargées dans une mémoire RAM (Random Access Memory en anglais) avant d'être exécutées par le processeur de l'unité de traitement 603. Le processeur de l'unité de traitement 603 met en oeuvre les étapes du procédé de composition selon les instructions du programme d'ordinateur 602.

Pour cela, le dispositif comprend, outre la mémoire 601, des moyens de communication 604 (COM) permettant au dispositif de se connecter à un réseau de télécommunication et d'échanger des données avec d'autres dispositifs par l'intermédiaire du réseau de télécommunications. Ces moyens de communication peuvent par exemple être une interface réseau et peuvent servir à télécharger au moins une partie d'une représentation d'un contenu vidéo comme par exemple des paramètres d'encodage tels que des données SIDX, SSIX, SPS, PPS et SEI dans le cas d'un contenu encodé selon la norme HEVC, ou encore les données correspondant à des tuiles provenant de différentes représentations. Le dispositif comprend aussi une unité de détection 609 d'un contexte de visualisation de la séquence vidéo. Il peut s'agir d'un capteur DETECT configuré pour capturer des images de l'environnement à proximité du dispositif et de détecter l'arrivée et/ou le départ de spectateurs à proximité du dispositif. L'unité DETECT est en outre configurée pour suivre le regard d'au moins un spectateur détecté et de déterminer un emplacement sur l'écran d'un dispositif de restitution. Le capteur DETECT peut être par exemple une caméra ou une caméra infrarouge associée à une unité de traitement comprenant un processeur et une mémoire, le processeur étant piloté par un programme d'ordinateur configuré pour détecter dans les images capturées la présence ou l'absence de visages et la direction du regard des visages détectés. Le dispositif comprend également une unité 607 (SELECT) de sélection, selon au moins un critère de sélection, d'un ensemble de tuiles formant une partition de la séquence et composé de tuiles provenant des au moins deux représentations, et une unité 605 (COMPOSE) de composition d'une représentation intermédiaire de la séquence vidéo à partir des données compressées de l'ensemble de tuiles sélectionné, adapté pour reconstruire un flux vidéo conforme à la norme de codage et pour transmettre ce flux à un décodeur vidéo 608. Selon un mode particulier de réalisation, le dispositif peut également comprendre une unité 606 (CTRL) d'estimation de la bande passante disponible, de calcul du débit résultant d'une représentation intermédiaire composée et de vérification que le débit résultant est inférieur à un seuil prédéterminé.

Selon un mode particulier de réalisation, le dispositif peut être intégré dans un terminal de décodage vidéo de type téléphone mobile, set-top box, décodeur vidéo, télévision connectée ou encore par exemple dans un ordinateur personnel.

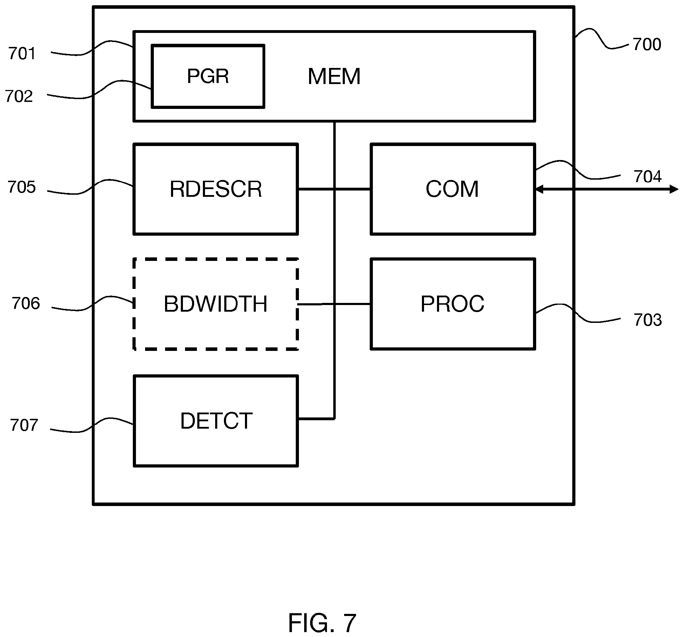

La **figure 7** illustre un dispositif 700 mettant en oeuvre le procédé de téléchargement d'une représentation intermédiaire selon un mode particulier de réalisation. Le dispositif comprend un espace de stockage 701, par exemple une mémoire MEM, une unité de traitement 703 équipée par exemple d'un processeur PROC. L'unité de traitement peut être pilotée par un programme 702, par exemple un programme d'ordinateur PGR, mettant en œuvre le procédé de téléchargement d'une représentation intermédiaire tel que décrit dans l'invention, et notamment les étapes de lecture d'une indication représentative de la capacité d'un serveur à composer une représentation intermédiaire d'une séquence vidéo, de détermination d'une donnée de contexte représentative de l'activité de spectateurs situés proximité du dispositif de restitution, de transmission d'un critère de sélection des tuiles, et de réception d'une représentation intermédiaire composée selon le critère de sélection transmis.

À l'initialisation, les instructions du programme d'ordinateur 702 sont par exemple chargées dans une mémoire RAM (Random Access Memory en anglais) avant d'être exécutées par le processeur de l'unité de traitement 703. Le processeur de l'unité de traitement 703 met en oeuvre les étapes du procédé de téléchargement selon les instructions du programme d'ordinateur 702.

Pour cela, le dispositif comprend, outre la mémoire 701, des moyens de communication 704 (COM) permettant au dispositif de se connecter à un réseau de télécommunication et d'échanger des données avec d'autres dispositifs par l'intermédiaire du réseau de télécommunications. Ces moyens de communication peuvent par exemple être une interface réseau et peuvent servir à obtenir une indication représentative d'une capacité du dispositif à composer une représentation intermédiaire d'une séquence vidéo en téléchargeant par exemple un fichier manifeste comportant une telle indication. Les moyens de communication 704 peuvent également servir à transmettre un critère de sélection des tuiles à un serveur de diffusion vidéo adapté pour composer une représentation intermédiaire selon la présente invention et à recevoir une représentation intermédiaire composée selon le critère transmis. Le dispositif comprend aussi une unité de détection 707 d'un contexte de visualisation de la séquence vidéo. Il peut s'agir d'un capteur DETECT configuré pour capturer des images de l'environnement à proximité du dispositif et de détecter l'arrivée et/ou le départ de spectateurs à proximité du dispositif. L'unité DETECT est en outre configurée pour suivre le regard d'au moins un spectateur détecté et de déterminer un emplacement sur l'écran d'un dispositif de restitution. Le capteur DETECT peut être par exemple une caméra ou une caméra infrarouge associée à une unité de traitement comprenant un processeur et une mémoire, le processeur étant piloté par un programme d'ordinateur configuré pour détecter dans les images capturées la présence ou l'absence de visages et la direction du regard des visages détectés. Selon une réalisation particulière, le dispositif comprend une unité 706 (BANDWIDTH) adapté pour estimer la bande passante disponible pour recevoir un flux vidéo. Il peut s'agir par exemple d'une unité de surveillance du niveau de remplissage d'une mémoire tampon d'un décodeur vidéo.

Selon un mode particulier de réalisation, le dispositif peut être intégré dans un terminal de décodage vidéo de type téléphone mobile, set-top box, décodeur vidéo, télévision connectée ou encore par exemple dans un ordinateur personnel.

## Revendications

1. Procédé de composition d'une représentation intermédiaire d'une séquence vidéo à partir d'au moins deux représentations de qualité différentes de ladite séquence vidéo, lesdites au moins deux représentations étant partitionnées spatialement en une pluralité de tuiles, chaque tuile étant associée à des données compressées dans ladite représentation, le procédé étant **caractérisé en ce que** les tuiles sont décodables indépendamment les unes des autres et **en ce qu'**à un instant donné les différentes représentations sont partitionnées de manière identique, le procédé comportant les étapes suivantes lorsque la séquence est en cours de restitution sur un dispositif de restitution:
- Obtention (303) d'une donnée de contexte représentative de l'activité de spectateurs situés proximité du dispositif de restitution, ladite donnée de contexte comprenant une indication relative au fait qu'un nouveau spectateur est à proximité du terminal, la donnée de contexte étant obtenue au moyen d'un capteur associé à une unité de traitement configurée pour analyser les images capturées et détecter la présence d'un spectateur devant l'écran,
- Sélection (305), selon la donnée de contexte obtenue et au moins un critère de débit maximum de la représentation intermédiaire résultant de la composition, d'un ensemble de tuiles formant une partition de la séquence, provenant des au moins deux représentations, les tuiles étant sélectionnées dans la représentation de plus haute qualité pour la partie centrale de l'image, et
- Composition (306) d'une représentation intermédiaire de la séquence vidéo à partir des données compressées associées à l'ensemble de tuiles sélectionné.

2. Procédé selon la revendication 1, **caractérisé en ce qu'**il comprend en outre des étapes de :
- Calcul du débit résultant de la représentation intermédiaire,
- Vérification que le débit résultant n'excède pas un seuil prédéterminé, et
- Sélection d'un nouvel ensemble de tuiles lorsque le débit résultant est supérieur au seuil prédéterminé.

3. Procédé selon l'une quelconque des revendications 1 ou 2, **caractérisé en ce que** la donnée de contexte comprend une indication relative à un emplacement sur l'image, l'emplacement correspondant à une zone de l'écran d'un terminal observée par au moins un spectateur, et **en ce que** l'étape de sélection comprend la sélection de tuiles dans la représentation de plus haute qualité pour la partie de l'image correspondant à l'emplacement indiqué.

4. Procédé de téléchargement d'une représentation intermédiaire sur un terminal **caractérisé en ce qu'**il comporte les étapes suivantes :
- Lecture d'une indication représentative de la capacité d'un serveur à composer une représentation intermédiaire d'une séquence vidéo,
- Détermination d'une donnée de contexte représentative de l'activité de spectateurs situés à proximité du dispositif de restitution, ladite donnée de contexte comprenant une indication relative au fait qu'un nouveau spectateur est à proximité du terminal, la donnée de contexte étant obtenue au moyen d'un capteur associé à une unité de traitement configurée pour analyser les images capturées et détecter la présence d'un spectateur devant l'écran,
- Transmission de la donnée de contexte déterminée, et
- Réception d'une représentation intermédiaire composée conformément au procédé de la revendication 1 selon la donnée de contexte transmise.

5. Procédé de téléchargement d'une représentation intermédiaire selon la revendication 4 caractérisé en ce la donnée de contexte est déterminée par une analyse d'images capturées par un capteur associé au terminal.

6. Procédé de téléchargement d'une représentation intermédiaire selon l'une des revendications 4 ou 5 **caractérisé en ce que** la donnée de contexte comprend une indication relative à un emplacement sur l'image, l'emplacement correspondant à une zone de l'écran du terminal observée par au moins un spectateur.

7. Dispositif de composition d'une représentation intermédiaire d'une séquence vidéo à partir d'au moins deux représentations de qualité différentes de ladite séquence vidéo, lesdites au moins deux représentations étant partitionnées spatialement en une pluralité de tuiles, chaque tuile étant associée à des données compressées dans ladite représentation, le dispositif étant **caractérisé en ce que** les tuiles sont décodables indépendamment les unes des autres et **en ce qu'**à un instant donné, les différentes représentations sont partitionnées de manière identique, le dispositif comprenant des modules de:
- Obtention d'une donnée de contexte représentative de l'activité de spectateurs situés à proximité du dispositif de restitution, ladite donnée de contexte comprenant une indication relative au fait qu'un nouveau spectateur est à proximité du terminal, la donnée de contexte étant obtenue au moyen d'un capteur associé à une unité de traitement configurée pour analyser les images capturées et détecter la présence d'un spectateur devant l'écran,
- Sélection, selon la donnée de contexte obtenue et au moins un critère de débit maximum de la représentation intermédiaire résultant de la composition, d'un ensemble de tuiles formant une partition de la séquence, provenant des au moins deux représentations, les tuiles étant sélectionnées dans la représentation de plus haute qualité pour la partie centrale de l'image et
- Composition d'une représentation intermédiaire de la séquence vidéo à partir des données compressées associées à l'ensemble de tuiles sélectionné.

8. Serveur comprenant un dispositif de composition d'une représentation intermédiaire d'une séquence vidéo selon la revendication 7.

9. Terminal comprenant un dispositif de composition d'une représentation intermédiaire d'une séquence vidéo selon la revendication 7.

10. Dispositif de téléchargement d'une représentation intermédiaire **caractérisé en ce qu'**il comporte :
- une unité de lecture d'une indication représentative de la capacité d'un serveur à composer une représentation intermédiaire d'une séquence vidéo,
- des moyens de capture configurés pour obtenir une donnée contextuelle relative à l'activité de spectateurs à proximité d'un terminal de restitution,
- des moyens de communication aptes transmettre la donnée contextuelle obtenue, et à recevoir une représentation intermédiaire composée selon la donnée contextuelle conformément au procédé de la revendication 1.

11. Terminal comprenant un dispositif de téléchargement d'une représentation intermédiaire selon la revendication 10.

12. Support d'informations lisible par un processeur sur lequel est enregistré un programme d'ordinateur comprenant des instructions pour l'exécution des étapes du procédé de composition selon l'une quelconque des revendications 1 à 3 et/ou des instructions pour l'exécution du procédé de téléchargement selon l'une quelconque des revendications 4 à 6.

## Patentansprüche

1. Verfahren zur Zusammensetzung einer Zwischendarstellung einer Videosequenz anhand mindestens zweier Darstellungen unterschiedlicher Qualität der Videosequenz, wobei die mindestens zwei Darstellungen räumlich in eine Mehrzahl von Kacheln unterteilt werden, wobei jede Kachel komprimierten Daten in der Darstellung zugeordnet wird, wobei das Verfahren **dadurch gekennzeichnet ist, dass** die Kacheln unabhängig voneinander decodierbar sind, und dadurch, dass zu einem bestimmten Zeitpunkt die verschiedenen Darstellungen auf identische Weise unterteilt werden, wobei das Verfahren die folgenden Schritte aufweist, wenn die Sequenz auf einer Wiedergabevorrichtung wiedergegeben wird:
- Erhalten (303) eines Kontextdatenelements, das für die Aktivität von Betrachtern repräsentativ ist, die sich in der Nähe der Wiedergabevorrichtung befinden, wobei das Kontextdatenelement eine Angabe in Bezug darauf umfasst, dass sich ein neuer Betrachter in der Nähe des Endgeräts befindet, wobei das Kontextdatenelement mittels eines Sensors erhalten wird, der einer Verarbeitungseinheit zugeordnet ist, die dazu ausgebildet ist, die aufgenommenen Bilder zu analysieren und die Anwesenheit eines Betrachters vor dem Bildschirm zu erkennen,
- Auswählen (305), gemäß dem erhaltenen Kontextdatenelement und mindestens einem Kriterium eines Höchstdurchsatzes der Zwischendarstellung, die aus der Zusammensetzung resultiert, einer Menge von Kacheln, die eine Aufteilung der Sequenz bilden, die aus den mindestens zwei Darstellungen stammen, wobei die Kacheln in der Darstellung höchster Qualität für den Mittelabschnitt des Bilds ausgewählt werden, und
- Zusammensetzen (306) einer Zwischendarstellung der Videosequenz anhand der komprimierten Daten, die der ausgewählten Menge von Kacheln zugeordnet sind.

2. Verfahren nach Anspruch 1, **dadurch gekennzeichnet, dass** es ferner folgende Schritte umfasst:
- Berechnen des Durchsatzes, der aus der Zwischendarstellung resultiert,
- Überprüfen, dass der resultierende Durchsatz eine vorbestimmte Schwelle nicht überschreitet, und
- Auswählen einer neuen Menge von Kacheln, wenn der resultierende Durchsatz über der vorbestimmten Schwelle liegt.

3. Verfahren nach einem der Ansprüche 1 oder 2, **dadurch gekennzeichnet, dass** das Kontextdatenelement eine Angabe in Bezug auf eine Stelle auf dem Bild umfasst, wobei die Stelle einem Bereich des Bildschirms eines Endgeräts entspricht, der von mindestens einem Betrachter betrachtet wird, und dadurch, dass der Schritt des Auswählens das Auswählen von Kacheln in der Darstellung höchster Qualität für den Abschnitt des Bilds umfasst, der der angegebenen Stelle entspricht.

4. Verfahren zum Herunterladen einer Zwischendarstellung auf ein Endgerät, **dadurch gekennzeichnet, dass** es die folgenden Schritte aufweist:
- Lesen einer Angabe, die für die Fähigkeit eines Servers, eine Zwischendarstellung einer Videosequenz zusammenzusetzen, repräsentativ ist,
- Bestimmen eines Kontextdatenelements, das für die Aktivität von Betrachtern repräsentativ ist, die sich in der Nähe der Wiedergabevorrichtung befinden, wobei das Kontextdatenelement eine Angabe in Bezug darauf umfasst, dass sich ein neuer Betrachter in der Nähe des Endgeräts befindet, wobei das Kontextdatenelement mittels eines Sensors erhalten wird, der einer Verarbeitungseinheit zugeordnet ist, die dazu ausgebildet ist, die aufgenommenen Bilder zu analysieren und die Anwesenheit eines Betrachters vor dem Bildschirm zu erkennen,
- Übertragen des bestimmten Kontextdatenelements, und
- Empfangen einer Zwischendarstellung, die nach dem Verfahren nach Anspruch 1 gemäß dem übertragenen Kontextdatenelement zusammengesetzt wurde.

5. Verfahren zum Herunterladen einer Zwischendarstellung nach Anspruch 4, **dadurch gekennzeichnet, dass** das Kontextdatenelement durch eine Analyse von Bildern bestimmt wird, die von einem Sensor aufgenommen werden, der dem Endgerät zugeordnet ist.

6. Verfahren zum Herunterladen einer Zwischendarstellung nach einem der Ansprüche 4 oder 5, **dadurch gekennzeichnet, dass** das Kontextdatenelement eine Angabe in Bezug auf eine Stelle auf dem Bild umfasst, wobei die Stelle einem Bereich des Bildschirms des Endgeräts entspricht, der von mindestens einem Zuschauer betrachtet wird.

7. Vorrichtung zur Zusammensetzung einer Zwischendarstellung einer Videosequenz anhand mindestens zweier Darstellungen unterschiedlicher Qualität der Videosequenz, wobei die mindestens zwei Darstellungen räumlich in eine Mehrzahl von Kacheln unterteilt werden, wobei jede Kachel komprimierten Daten in der Darstellung zugeordnet wird, wobei die Vorrichtung **dadurch gekennzeichnet ist, dass** die Kacheln unabhängig voneinander decodierbar sind, und dadurch, dass zu einem bestimmten Zeitpunkt die verschiedenen Darstellungen auf identische Weise unterteilt werden, die Vorrichtung umfassend Module zum:
- Erhalten eines Kontextdatenelements, das für die Aktivität von Betrachtern repräsentativ ist, die sich in der Nähe der Wiedergabevorrichtung befinden, wobei das Kontextdatenelement eine Angabe in Bezug darauf umfasst, dass sich ein neuer Betrachter in der Nähe des Endgeräts befindet, wobei das Kontextdatenelement mittels eines Sensors erhalten wird, der einer Verarbeitungseinheit zugeordnet ist, die dazu ausgebildet ist, die aufgenommenen Bilder zu analysieren und die Anwesenheit eines Betrachters vor dem Bildschirm zu erkennen,
- Auswählen, gemäß dem erhaltenen Kontextdatenelement und mindestens einem Kriterium eines Höchstdurchsatzes der Zwischendarstellung, die aus der Zusammensetzung resultiert, einer Menge von Kacheln, die eine Aufteilung der Sequenz bilden, die aus den mindestens zwei Darstellungen stammen, wobei die Kacheln in der Darstellung höchster Qualität für den Mittelabschnitt des Bilds ausgewählt werden, und
- Zusammensetzen einer Zwischendarstellung der Videosequenz anhand der komprimierten Daten, die der ausgewählten Menge von Kacheln zugeordnet sind.

8. Server umfassend eine Vorrichtung zur Zusammensetzung einer Zwischendarstellung einer Videosequenz nach Anspruch 7.

9. Endgerät umfassend eine Vorrichtung zur Zusammensetzung einer Zwischendarstellung einer Videosequenz nach Anspruch 7.

10. Vorrichtung zum Herunterladen einer Zwischendarstellung, **dadurch gekennzeichnet, dass** sie Folgendes aufweist:
- eine Einheit zum Lesen einer Angabe, die für die Fähigkeit eines Servers, eine Zwischendarstellung einer Videosequenz zusammenzusetzen, repräsentativ ist,
- Aufnahmemittel, die dazu ausgebildet sind, ein Kontextdatenelement in Bezug auf die Aktivität von Betrachtern in der Nähe eines Wiedergabe-Endgeräts zu erhalten,
- Kommunikationsmittel, die geeignet sind, das erhaltene Kontextdatenelement zu übertragen und eine Zwischendarstellung zu empfangen, die gemäß dem Kontextdatenelement entsprechend dem Verfahren nach Anspruch 1 zusammengesetzt ist.

11. Endgerät umfassend eine Vorrichtung zum Herunterladen einer Zwischendarstellung nach Anspruch 10.

12. Prozessorlesbarer Informationsträger, auf dem ein Computerprogramm gespeichert ist, das Befehle zur Ausführung der Schritte des Verfahrens zur Zusammensetzung nach einem der Ansprüche 1 bis 3 und/oder Befehle zur Ausführung des Verfahrens zum Herunterladen nach einem der Ansprüche 4 bis 6 umfasst.

## Claims

1. Method for composition of an intermediate representation of a video sequence from at least two representations of different quality of said video sequence, said at least two representations being spatially partitioned into a plurality of tiles, each tile being associated with data compressed in said representation, the method being **characterised in that** the tiles can be decoded independently of one another and **in that**, at a given instant, the different representations are partitioned identically, the method comprising the following steps when the sequence is currently being rendered on a rendering device:
- obtaining (303) a context datum representative of the activity of viewers situated in proximity to the rendering device, said context datum comprising an indication relating to the fact that a new viewer is in proximity to the terminal, the context datum being obtained by means of a sensor associated with a processing unit configured to analyse the captured pictures and detect the presence of a viewer in front of the screen,
- selecting (305), according to the context datum obtained at least one criterion of maximum bit rate of the intermediate representation resulting from the composition, of an example of tiles forming a partition of the sequence, originating from the at least two representations, the tiles being selected in the representation of highest quality for the central part of the image, and
- composing (306) an intermediate representation of the video sequence from the compressed data associated with the selected set of tiles.

2. Method according to Claim 1, **characterized in that** it also comprises steps of:
- calculating the bit rate resulting from the intermediate representation,
- checking that the resulting bit rate does not exceed a predetermined threshold, and
- selecting a new set of tiles when the resulting bit rate is higher than the predetermined threshold.

3. Method according to either one of Claims 1 and 2, **characterized in that** the context datum comprises an indication relating to a location on the image, the location corresponding to a zone of the screen of a terminal observed by at least one viewer, and **in that** the selection step comprises the selection of tiles in the representation of highest quality for the part of the image corresponding to the indicated location.

4. Method for downloading an intermediate representation on a terminal, **characterized in that** it comprises the following steps:
- reading an indication representative of the capacity of a server to compose an intermediate representation of a video sequence,
- determining a context datum representative of the activity of viewers situated in proximity to the rendering device, said context datum comprising an indication relating to the fact that a new viewer is in proximity to the terminal, the context datum being obtained by means of a sensor associated with a processing unit configured to analyse the captured images and detect the presence of a viewer in front of the screen,
- transmitting the determined context datum, and
- receiving an intermediate representation composed in accordance with the method of Claim 1 according to the transmitted context datum.

5. Method for downloading an intermediate representation according to Claim 4, **characterized in that** the context datum is determined by an analysis of images captured by a sensor associated with the terminal.

6. Method for downloading an intermediate representation according to one of Claims 4 and 5, **characterized in that** the context datum comprises an indication relating to a location on the image, the location corresponding to a zone of the screen of the terminal observed by at least one viewer.

7. Device for composing an intermediate representation of a video sequence from at least two representations of different quality of said video sequence, said at least two representations being spatially partitioned into a plurality of tiles, each tile being associated with compressed data in said representation, the device being **characterized in that** the tiles can be decoded independently of one another and **in that**, at a given instant, the different representations are partitioned identically, the device comprising modules for:
- obtaining a context datum representative of the activity of viewers situated in proximity to the rendering device, said context datum comprising an indication relating to the fact that a new viewer is in proximity to the terminal, the context datum being obtained by means of a sensor associated with a processing unit configured to analyse the captured images and detect the presence of a viewer in front of the screen,
- selecting, according to the context datum obtained and at least one criterion of maximum bit rate of the intermediate representation resulting from the composition, a set of tiles forming a partition of the sequence, originating from the at least two representations, the tiles being selected in the representation of highest quality for the central part of the image, and
- composing an intermediate representation of the video sequence from the compressed data associated with the selected set of tiles.

8. Server comprising a device for composing an intermediate representation of a video sequence according to Claim 7.

9. Terminal comprising a device for composing an intermediate representation of a video sequence according to Claim 7.

10. Device for downloading an intermediate representation, **characterized in that** it comprises:
- a unit for reading an indication representative of the capacity of a server to compose an intermediate representation of a video sequence,
- capture means configured to obtain a contextual datum relating to the activity of viewers in proximity to a rendering terminal,
- communication means capable of transmitting the contextual datum obtained, and of receiving an intermediate representation composed according to the contextual datum in accordance with the method of Claim 1.

11. Terminal comprising a device for downloading an intermediate representation according to Claim 10.

12. Information medium that can be read by a processor on which is stored a computer program comprising instructions for executing the steps of the composition method according to any of Claims 1 to 3 and/or instructions for executing the downloading method according to any of Claims 4 to 6.
